# EUROPÄISCHE PATENTSCHRIFT

(11) **EP 1 797 390 B1**
(45) Veröffentlichungstag und Bekanntmachung des Hinweises auf die Patenterteilung: **30.11.2016**
(21) Anmeldenummer: 05796301.9
(22) Anmeldetag: 07.10.2005
(51) Int. Cl.: F41G 3/26

(54) **SENSORMODUL ZUR TREFFERERFASSUNG FÜR GEFECHTSFELDSIMULATIONEN**
SENSOR MODULE FOR DETECTING HITS FOR BATTLE FIELD SIMULATIONS
MODULE DE DETECTION POUR DETERMINER DES IMPACTS LORS DE SIMULATIONS DE ZONES DE COMBAT

(30) Priorität: 08.10.2004 DE 102004049382
(43) Veröffentlichungstag der Anmeldung: 20.06.2007
(73) Patentinhaber: Rheinmetall Defence Electronics GmbH, 28309 Bremen (DE)
(72) Erfinder: EISENHAUER, Joachim, 28211 Bremen (DE); WENDT, Klaus, 27367 Sottrum (DE)
(74) Vertreter: Greif, Thomas
(86) Internationale Anmeldenummer: PCT/EP2005/010826
(87) Internationale Veröffentlichungsnummer: WO 2006/040089

(56) Entgegenhaltungen:
- EP-A- 0 836 069
- EP-A- 0 945 697
- DE-A1- 3 201 925
- DE-U1- 9 201 171
- GB-A- 2 216 813
- US-A- 4 545 583
- US-A- 4 899 039

## Beschreibung

### Technisches Gebiet

Die Erfindung betrifft ein Sensormodul zur Treffererfassung für Gefechtsfeldsimulationen und dessen Verwendung bei einer Gefechtsfeldsimulation.

### Stand der Technik

Bekannterweise werden in Gefechtsübungszentren und der Schießausbildung mit direkt gerichteten Waffen Duellsimulatoren verwendet. Dabei wird die Information über den Schießenden, den Schuß, über die Art der Waffe und der verwendeten Munition mittels gerichtetem und codiertem Infrarot-Laserstrahl auf das Ziel übertragen. Auf dem Teilnehmer, der ein potentielles Ziel darstellt, sind mehrere Detektoren verteilt, die den auftreffenden Laserstrahl detektieren und die per Kabel mit einer Auswerte-Elektronik, der sogenannten Teilnehmereinheit, verbunden sind, die von dem Teilnehmer getragen wird. Sensorabstand und -position sind in Abhängigkeit vom Durchmesser des auftreffenden Laserstrahles so gewählt, dass eine sinnvolle Aussage über den Auftreffpunkt des Strahles auf das Ziel und damit über die in der Realität eintretende Waffenwirkung gemacht werden kann. Dazu ist in der Teilnehmereinheit ein Auswertesystem vorhanden, das nach einem hinterlegten Verwundbarkeitsmodell den Treffer auswertet. Zusätzlich enthält die Teilnehmereinheit ein Funksystem, das zur Treffermeldung mit der Übungsleitzentrale in Funkkontakt treten kann.

Während des Betriebs der bekannten Sensorausstattungen im militärischen Umfeld kommt es häufig zu Beschädigungen der Sensoren oder der Kabelverbindungen an den Sensoren und damit zu einer Funktionseinschränkung oder zum

Ausfall des gesamten Sensor-Systems und damit des Übungsteilnehmers. Die Identifizierung eines defekten Sensors oder einer defekten Kabelverbindung ist aufgrund der Art der Verschaltung in einer Parallel-Reihe schwierig und aufwändig. Der Reparaturaufwand ist im Verhältnis zum Wert der Ausstattung sehr hoch.

Ein solches Sensorsystem wird in der EP 0 836 069 A1 offenbart. Hierzu wird ein Gurtsystem vorgeschlagen mit einer Kontrolleinheit und mehreren, von der Kontrolleinheit gesteuerten Komponenten, wie Beispielsweise Lichtdetektoren.

### Darstellung der Erfindung

Der Erfindung liegt daher die Aufgabe zugrunde, ein Sensormodul zur Treffererfassung für Gefechtsfeldsimulationen zu schaffen, das die vorstehend beschriebenen Nachteile nicht aufweist.

Diese Aufgabe wird nach der Erfindung durch ein Sensormodul nach Anspruch 1 gelöst.

Als "Teilnehmer" wird dabei ganz allgemein ein potentielles Ziel bei einer Gefechtsfeldsimulation bezeichnet. Teilnehmer kann somit eine Person, ein Fahrzeug oder auch ein Gebäude sein.

Die einzelnen Sensormodule eines Teilnehmers können so mittels Kurzstreckenfunk in einem Funknetzwerk miteinander und mit der Teilnehmereinheit verbunden werden. Beispielsweise kann ein auf der Blue-Tooth-Technologie basierendes Funk-Netzwerk mit einer Reichweite von bis zu 5 Metern verwendet werden.

Jeder Infrarotsensor eines Teilnehmers ist somit kabellos über Funk mit der Teilnehmereinheit verbunden. Dies vermindert die Schadenshäufigkeit, da keine Kabel vorhanden sind, die brechen können. Die Ausstattung mit den Sensormodulen braucht auch nicht auf den speziellen Teilnehmer angepasst zu werden. Da nur ein Sensortyp für vielfältige Anwendungen benötigt wird, ist eine standardisierte Herstellung möglich und die Lagerhaltung vereinfacht sich. Dies führt sowohl bei der Herstellung als auch bei der Wartung zu erheblichen Kostensenkungen. Ebenso wird die Fehlersuche und -erkennung vereinfacht.

Als weitere Vorteile treten hinzu, dass sich die Sensormodule vereinfacht an dem Teilnehmer anbringen und entfernen lassen. Die Ausstattung von neuen oder neuartigen Zielen wird vereinfacht, und eine flexible Anbringung der Sensormodule mit variablen Verwundbarkeitsmodulen unterschiedlicher Auflösung wird möglich.

Bei der vorteilhaften Ausführungsform nach Patentanspruch 2 ist der Kurzstreckensender Teil eines Funkmoduls, das zur Kommunikation mit einer Teilnehmereinheit dient.

Zur Verlängerung seiner Einsatzzeit enthält das Sensormodul zusätzlich eine Solarzelle und einen von der Solarzelle unterstützend aufladbaren Akkumulator als Spannungsquelle. In Abhängigkeit von den Lichtverhältnissen wird so der Akkumulator aufgeladen oder seine Entladung deutlich gepuffert.

Die somit verbesserte Energieversorgung oder das vorteilhafte Energiesparsystem nach den Patentansprüchen 5 und 6 ermöglichen es, in das Sensormodul einen Signalverstärker zu integrieren, ohne die Gebrauchsdauer durch den erhöhten Energieverbrauch zu verringern (Patentanspruch 3). Die Empfindlichkeit des Sensormoduls wird durch den Signalverstärker gesteigert, so dass die ein Signal auslösende Laserenergie reduziert werden kann. Die Laser-Sendeleistungen können so auf einen Wert abgesenkt werden, bei dem jegliche Gefährdung der Augen von Teilnehmern ausgeschlossen ist. Ein weiterer Vorteil des Signalverstärkers besteht darin, dass Filter zur Ausfilterung von störendem Fremdlicht, z.B. Sonnenlicht, angebracht werden können (Patentanspruch 7).

Die besonders vorteilhaften Ausgestaltungen nach den Patentansprüchen 5 und 6 haben einen verminderten Energiebedarf, so dass die Einsatzzeit des Sensormoduls erheblich verlängert ist. Dazu ist das Sensormodul in einen Schlafmodus schaltbar, in dem der Infrarot-Sensor und der Signalverstärker aktiviert, der Kurzstreckenfunksender und der Signalprozessor deaktiviert sind.

Der Kurzstreckenfunksender und der Signalprozessor werden durch einen eingehenden IR-Impuls aus dem Schlafmodus aktiviert und fallen nach der Verarbeitung und Weiterleitung des IR-Signals automatisch in den Schlafmodus zurück.

Bevorzugt hat der Sensor des Sensormoduls einen wirksamen Öffnungswinkel von mehr als 90°, bevorzugt etwa 120° (Patentanspruch 8). Durch den großen Öffnungswinkel und die höhere Empfindlichkeit des Sensors wird erreicht, dass auch Streulicht von Unebenheiten auf dem Ziel aufgenommen und verwertet wird. Da das Laserstrahlbündel im Nahfeld (Entfernung weniger als 5 bis 10 Meter) bei höherer Energiedichte einen geringen Durchmesser hat, kann es vorkommen, dass auch bei Körpertreffern die Sensoren nicht direkt beleuchtet werden. Bei den bekannten Sensoren führt dies zu einem unrealistischen Training, während der Sensor nach der Erfindung auch Streulicht aufnimmt und verwertet. Im Fernfeld kann das Ziel von allen Seiten getroffen werden.

### Kurze Beschreibung der Zeichnung

Nachfolgend wird die Erfindung anhand eines bevorzugten Ausführungsbeispiels näher erläutert.
- Figur 1: zeigt eine Draufsicht auf ein erfindungsgemäßes Sensormodul,
- Figur 2: zeigt eine Seitenansicht des Sensormoduls, und
- Figur 3: zeigt eine Draufsicht auf eine zweite Ausführungsform
- Figur 4: zeigt als Blockschaltbild die Verwendung des Sensormoduls bei einer Gefechtsfeldsimulation.

### Wege zur Ausführung der Erfindung

Das Sensormodul 1 besteht aus einem Gehäuse 2 in Form eines flachen Zylinders, der an seiner Rückseite verschlossen ist. Auf der Vorderseite ist in einer kreisförmigen Aussparung des Gehäuses 2 ein Infrarotsensor 3 befestigt, dessen Empfangsoberfläche einen Raumwinkel von mehr als 90°, bevorzugt etwa 120°, abdeckt. Zumindest eine Solarzelle 4 ist außen um den Sensor 3 herum angeordnet, die einen im Innern des Gehäuses 2 angeordneten Akkumulator unterstützend auflädt. Der Akkumulator versorgt als elektrische Spannungsquelle das Sensormodul 1 mit der erforderlichen elektrischen Leistung.

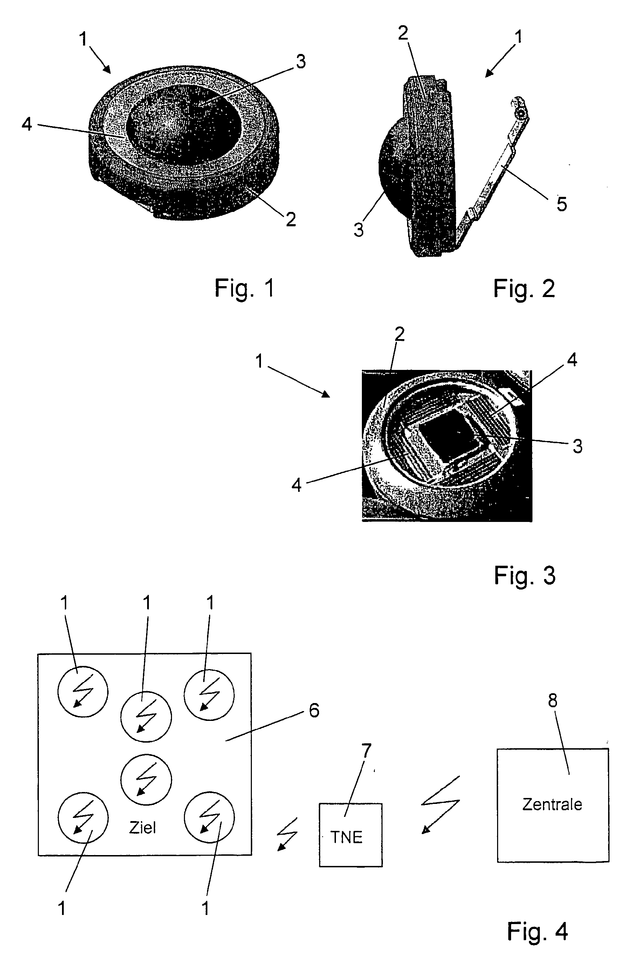

Bei der Ausführungsform nach Figur 1 und 2 hat die Empfangsoberfläche des in etwa halbkugelförmig gestalteten Sensors 3 die Form einer Kugelkappe und ragt aus dem Gehäuse 2 heraus. Eine Solarzelle 4 ist ringförmig außen um den Sensor 3 herum angeordnet.

Bei der Ausführungsform nach Figur 3 ist ein flacher Sensor 3 in der kreisförmigen Aussparung des Gehäuses 2 hinter einer Scheibe befestigt. Hinter der Scheibe ist an jeder Seite neben dem Sensor 3 jeweils eine Solarzelle 4 angeordnet. Es sind somit vier Solarzellen 4 vorhanden.

Bei allen Ausführungsformen ist im Innern des Gehäuses 2 ein Funkmodul angeordnet, das zur Kommunikation mit einer Teilnehmereinheit 7 dient. Das Funkmodul enthält einen Kurzstreckenfunksender, der mit niedriger Sendeleistung bei hohen Frequenzen, vorzugsweise in einem ISM-Band, sendet und eine Reichweite von maximal 5 m hat. Beispielsweise ist der Kurzstreckenfunksender als auf Blue-Tooth-Technologie basierender Sender gestaltet. Weiterhin befindet sich im Innern des Gehäuses 2 ein analoger Vorverstärker, der die von dem Infrarot-Sensor 3 erzeugten gepulsten Signale verstärkt. Ein ebenfalls im Gehäuse 2 befindlicher digitaler Signalprozessor identifiziert und analysiert die Signale, bevor sie von dem Kurzstreckensender an die Teilnehmereinheit 7 übermittelt werden.

Das Sensormodul 1 enthält bevorzugt zusätzliche optische Filter, die zur Ausfilterung von störendem Fremdlicht, z. B. von Sonnenlicht, dienen und so die Signalqualität verbessern. An der Rückseite des Gehäuses sind Mittel zum Befestigen des Sensormoduls 1 an dem Teilnehmer angeordnet. Im Beispiel bestehen die Befestigungsmittel aus einem an der Rückseite befestigten Clip 5, mit dem sich das Sensormodul 1 einfach an dem Teilnehmer 6 der Gefechtsfeldsimulation an klemmen lässt.

Wie in Figur 3 schematisch dargestellt, werden bei einer Gefechtsfeldsimulation die einzelnen Sensormodule 1 an dem Teilnehmer 6, also einer Person, einem Fahrzeug oder auch einem Gebäude, entsprechend dem Verwundungsmodell des potentiellen Zieles exakt an den empfindlichen Stellen platziert. Zusätzlich trägt jeder Teilnehmer 6 die Teilnehmereinheit 7, die als wesentliche Bestandteile ein Auswertesystem und ein Funksystem enthält, das zum einen die Signale der Sensormodule 1 des Teilnehmers 6 empfängt, zum anderen zur Übermittlung und zum Empfang von Daten in Funkverbindung mit der Übungsleitzentrale 8 treten kann. Die einzelnen Sensormodule 1 und die Teilnehmereinheit 7 bilden an dem einzelnen Teilnehmer 6 ein Funknetzwerk, das beispielsweise als WLAN-Netzwerk gestaltet ist. Falls der Simulationsteilnehmer ein Soldat ist, wird zweckmäßigerweise seine Simulationswaffe ebenfalls in das Funknetzwerk eingebunden.

Um den Energieverbrauch zu senken und damit die mögliche Einsatzzeit ohne Aufladung des Akkumulators zu verlängern, enthält jedes Sensormodul 1 ein Energiesparsystem, von dem das Sensormodul 1 grundsätzlich in einem Schlafmodus mit minimalem Energieverbrauch gehalten wird. Erst bei einem vom Sensor 3 detektierten Treffer wird das Modul 1 selbsttätig vollständig aktiviert und nimmt Funkkontakt mit seiner Teilnehmereinheit 7 auf. Nach dem Datenaustausch wird es wieder in den Schlafmodus versetzt.

Im Schlafmodus sind nur der Infrarotsensor 3 und der analoge Vorverstärker aktiviert. Diese beiden Elemente haben einen relativ geringen Stromverbrauch. Der Signalprozessor und das Funkmodul mit dem Sender, die im Betrieb relativ viel Strom verbrauchen, sind im Schlafmodus deaktiviert und somit auf minimalen Stromverbrauch geschaltet. Geht ein IR-Impuls ein, so werden der Signalprozessor und das Funkmodul von dem ersten Pulszug "geweckt" und zu voller Leistungsfähigkeit aktiviert. Dies ist ohne Verlust von Informationen möglich, da bei den bei Duellsimulationen bekannter Weise verwendeten IR-Signalcodes redundante Pulszüge mehrmals hintereinander ausgesandt werden, um Übertragungsfehler im Betrieb zu reduzieren. Die dem ersten, das Modul 1 aus dem Schlafmodus aktivierenden Pulszug nachfolgenden Pulszüge werden verarbeitet und weitergeleitet. Anschließend fällt das Sensormodul 1 automatisch wieder in den Schlafmodus zurück.

## Patentansprüche

1. Sensormodul (1) zur Treffererfassung für Gefechtsfeldsimulationen mit einem Gehäuse (2), das eine Aussparung aufweist, wobei das Sensormodul
• einen Infrarot-Sensor (3),
• einen Kurzstreckenfunksender,
• einen aufladbarer Akkumulator als elektrische Spannungsquelle
• eine Solarzelle (4) und
• Mittel zum Befestigen des Sensormoduls (1) an einem Teilnehmer (6) der Gefechtsfeldsimulation aufweist,
wobei der Infrarot-Sensor (3) in der Aussparung des Gehäuses (2)befestigt ist, wobei die Solarzelle um den Infrarot-Sensor (3) herum angeordnet ist,
wobei der Akkumulator im Inneren des Gehäuses (2) angeordnet ist,
wobei der Kurzstreckenfunksender im Inneren des Gehäuses (2) angeordnet ist, wobei der Akkumulator von der Solarzelle (4) aufladbar ist,
wobei der Kurzstreckensender Teil eines Funkmoduls ist, das zur Kommunikation mit einer Teilnehmereinheit (7) dient und
wobei die von dem Infrarot-Sensor (3) erzeugten Signale von dem Kurzstreckensender an die Teilnehmereinheit (7) übermittelt wird.

2. Sensormodul (1) nach Anspruch 1 , **dadurch gekennzeichnet, dass** es einen Signalverstärker zur Verstärkung der Signale des Infrarot-Sensors (3) enthält.

3. Sensormodul (1) nach Anspruch 1 oder 2, **dadurch gekennzeichnet, dass** es einen digitalen Signalprozessor zur Identifizierung und/oder Analyse der Signale enthält.

4. Sensormodul (1) nach Anspruch 3, **dadurch gekennzeichnet dass** es zur Verminderung des Energieverbrauchs in einen Schlafmodus schaltbar ist, in dem der Infrarot-Sensor (3) und der Signalverstärker aktiviert, der Kurzstreckenfunksender und der Signalprozessor deaktiviert sind.

5. Sensormodul (1) nach Anspruch 4, **dadurch gekennzeichnet dass** der Kurzstreckenfunksender und der Signalprozessor durch einen eingehenden IR-Impuls aus dem Schlafmodus aktiviert werden und nach der Verarbeitung und Weiterleitung des IR-Signals automatisch in den Schlafmodus zurückfallen.

6. Sensormodul (1) nach einem der Ansprüche 1 bis 5, **dadurch gekennzeichnet, dass** es Filter zur Ausfilterung von störendem Fremdlicht enthält.

7. Sensormodul (1) nach einem der Ansprüche 1 bis 6, **dadurch gekennzeichnet, dass** die Empfangsoberfläche des Infrarot-Sensors (3) einen Raumwinkel von mehr als 90°, bevorzugt etwa 120°, abdeckt.

8. Verwendung eines Sensormoduls (1) nach einem der Ansprüche 1 bis 7 zur Treffererfassung an dem Teilnehmer (6) einer Gefechtsfeldsimulation.

9. Verwendung nach Anspruch 8, wobei die einzelnen Sensormodule (1) eines Teilnehmers (6) mit seiner Teilnehmereinheit (7) in einem Funknetzwerk miteinander verbunden sind.

## Claims

1. Sensor module (1) for detecting hits for battle field simulations with a housing (2) comprising an aperture, wherein the sensor module comprises
• an infrared sensor (3),
• a short-range radio transmitter,
• a rechargeable accumulator as an electrical voltage supply
• a solar cell (4) and
• means for attaching the sensor module (1) to a participant (6) of the battle field simulation,
wherein the infrared sensor (3) is mounted in the aperture of the housing (2), wherein the solar cell is disposed around the infrared sensor (3),
wherein the accumulator is disposed in the interior of the housing (2),
wherein the short-range radio transmitter is disposed in the interior of the housing (2),
wherein the accumulator can be charged up by the solar cell (4),
wherein the short-range transmitter is part of a radio module that is used for communications with a participant unit (7) and
wherein the signals produced by the infrared sensor (3) are transmitted to the participant unit (7) by the short-range transmitter.

2. Sensor module (1) according to Claim 1, **characterized in that** it contains a signal amplifier for amplifying the signals of the infrared sensor (3).

3. Sensor module (1) according to Claim 1 or 2, **characterized in that** it contains a digital signal processor for identification and/or analysis of the signals.

4. Sensor module (1) according to Claim 3, **characterized in that** it can be switched into a sleep mode for reducing the energy consumption in which the infrared sensor (3) and the signal amplifier are activated and the short-range radio transmitter and the signal processor are deactivated.

5. Sensor module (1) according to Claim 4, **characterized in that** the short-range radio transmitter and the signal processor are activated from the sleep mode by an incoming IR pulse and automatically return to the sleep mode following the processing and forwarding of the IR signal.

6. Sensor module (1) according to any one of Claims 1 to 5, **characterized in that** it contains filters for filtering out interfering ambient light.

7. Sensor module (1) according to any one of Claims 1 to 6, **characterized in that** the receiving surface of the infrared sensor (3) covers a spatial angle of more than 90°, preferably about 120°.

8. Use of a sensor module (1) according to any one of Claims 1 to 7 for detecting hits on the participant (6) of a battle field simulation.

9. Use according to Claim 8, wherein the individual sensor modules (1) of a participant (6) with the participant unit (7) thereof are connected together in a radio network.

## Revendications

1. Module de détection (1) destiné à la détection de coups portants pour des simulations de champ de bataille, comprenant un boîtier (2) qui possède une cavité, le module de détection possédant
* un capteur à infrarouges (3),
* un émetteur radioélectrique à courte portée,
* un accumulateur rechargeable en tant que source de tension électrique,
* une cellule solaire (4) et
* des moyens servant à fixer le module de détection (1) à un participant (6) de la simulation de champ de bataille,
le capteur à infrarouges (3) étant fixé dans la cavité du boîtier (2),
la cellule solaire étant disposée autour du capteur à infrarouges (3),
l'accumulateur étant disposé à l'intérieur du boîtier (2),
l'émetteur radioélectrique à courte portée étant disposé à l'intérieur du boîtier (2),
l'accumulateur pouvant être chargé par la cellule solaire (4),
l'émetteur radioélectrique à courte portée faisant partie d'un module radioélectrique qui sert à la communication avec une unité de participant (7) et
les signaux générés par le capteur à infrarouges (3) étant communiqués de l'émetteur radioélectrique à courte portée à l'unité de participant (7).

2. Module de détection (1) selon la revendication 1, **caractérisé en ce qu'**il contient un amplificateur de signal destiné à amplifier les signaux du capteur à infrarouges (3).

3. Module de détection (1) selon la revendication 1 ou 2, **caractérisé en ce qu'**il contient un processeur de signal numérique destiné à identifier et/ou à analyser les signaux.

4. Module de détection (1) selon la revendication 3, **caractérisé en ce qu'**en vue de réduire la consommation d'énergie, il peut être commuté dans un mode de veille dans lequel le capteur à infrarouges (3) et l'amplificateur de signal sont activés et l'émetteur radioélectrique à courte portée et le processeur de signal sont désactivés.

5. Module de détection (1) selon la revendication 4, **caractérisé en ce que** l'émetteur radioélectrique à courte portée et le processeur de signal sont activés depuis le mode de veille par une impulsion IR entrante et retournent automatiquement dans le mode de veille après le traitement et le transfert du signal IR.

6. Module de détection (1) selon l'une des revendications 1 à 5, **caractérisé en ce qu'**il contient des filtres pour éliminer par filtrage la lumière externe parasite.

7. Module de détection (1) selon l'une des revendications 1 à 6, **caractérisé en ce que** la surface de réception du capteur à infrarouges (3) couvre un angle solide supérieur à 90°, de préférence d'environ 120°.

8. Utilisation d'un module de détection (1) selon l'une des revendications 1 à 7 pour la détection de coups portants sur le participant (6) à une simulation de champ de bataille.

9. Utilisation selon la revendication 8, les modules de détection (1) individuels d'un participant (6) avec son unité de participant (7) étant connectés les uns aux autres en un réseau radioélectrique.
